# EUROPÄISCHE PATENTANMELDUNG

(11) **EP 2 527 879 A2**
(43) Veröffentlichungstag der Anmeldung: **28.11.2012**
(21) Anmeldenummer: 12003878.1
(22) Anmeldetag: 16.05.2012
(51) Int. Cl.: G01V 8/20

(54) **Set zum Aufbau eines Lichtgitters**

(30) Priorität: 23.05.2011 DE 102011102310
(71) Anmelder: MARANTEC Antriebs- und Steuerungstechnik GmbH & Co. KG, 33428 Marienfeld (DE)
(72) Erfinder: Molterer, Hans-Joachim, 33790 Halle/Westfalen (DE)
(74) Vertreter: Laufhütte, Dieter

(57) **Zusammenfassung**

Die vorliegende Erfindung betrifft ein Set zum Aufbau eines Lichtgitters zur Überwachung eines Torlaufweges, wobei das Lichtgitter eine Mehrzahl von übereinander angeordneten Lichtschranken aufweist, welche jeweils aus einem Sender und einem Empfänger aufgebaut sind, wobei das Set eine Mehrzahl von Elementen umfaßt, welche jeweils mindestens einen Sender oder mindestens einen Empfänger aufweisen, wobei der mindestens eine Sender oder mindestens eine Empfänger in ein Gehäuse des Elementes eingebaut ist, wobei die Elemente Konnektoren aufweisen, durch welche sie mechanisch und/oder elektrisch miteinander verbindbar sind.

## Beschreibung

Die vorliegende Erfindung betrifft ein Set zum Aufbau eines Lichtgitters zur Überwachung eines Torlaufweges, wobei das Lichtgitter eine Mehrzahl von übereinander angeordneten Lichtschranken aufweist, welche jeweils aus einem Sender und einem Empfänger aufgebaut sind.

Lichtschranken werden seit langem eingesetzt, um die Sicherheit beim Betrieb von Torantrieben zu erhöhen. Hindernisse, welche sich im Torlaufweg befinden bzw. in diesen eindringen, unterbrechen dabei den von Sender und Empfänger der Lichtschranke gebildeten Lichtweg und werden so von der Lichtschranke erkannt. Ein erkanntes Hindernis wird dann der Torsteuerung signalisiert, welche wiederum das Tor in einen sicheren Zustand bringt.

Dabei ist es möglich, mehrere solcher Lichtschranken übereinander anzuordnen, und so ein Lichtgitter zu bilden, welches eine im wesentlichen flächige Überwachung des Torlaufweges ermöglicht. Hierdurch kann die Sicherheit beim Betrieb von Torantrieben weiter erhöht werden.

Die Sender und die Empfänger eines solchen Lichtgitters werden dabei üblicherweise jeweils in ein langes Gehäuse montiert, wobei die Gehäuse dann als ganzes auf beiden Seiten des Tores angeordnet werden. Die Länge des Gehäuses entspricht damit im wesentlichen der notwendigen Überwachungshöhe. Für den Transport und das Handling ist ein solches Gehäuse jedoch ungünstig.

Aufgabe der vorliegenden Erfindung ist es daher, eine einfachere Möglichkeit zur Montage und zum Handling eines Lichtgitters zu schaffen.

Diese Aufgabe wird erfindungsgemäß durch ein Set gemäß Anspruch 1 gelöst. Das erfindungsgemäße Set dient dabei zum Aufbau eines Lichtgitters zur Überwachung eines Torlaufweges, wobei das durch das Set aufbaubare Lichtgitter eine Mehrzahl von übereinander angeordneten Lichtschranken aufweist, welche jeweils aus einem Sender und einem Empfänger aufgebaut sind. Das Set umfasst dabei eine Mehrzahl von Elementen, welche jeweils mindestens einen Sender oder mindestens einen Empfänger aufweisen, wobei der mindestens eine Sender oder mindestens eine Empfänger in einem Gehäuse des Elementes eingebaut ist, und wobei die Elemente Konnektoren aufweisen, durch welche sie mechanisch und/oder elektrisch miteinander verbindbar sind. Die vorliegende Erfindung stellt damit im wesentlichen einen Baukasten aus mehreren Elementen zur Verfügung, aus welchen die beiden Seiten eines Lichtgitters aufgebaut werden können.

Erfindungsgemäß muss so nicht mehr mit einem Gehäuse gearbeitet werden, welches der gesamten Lichtgitterlänge entspricht, da das Lichtgitter nunmehr aus einzelnen Elementen zusammengesetzt werden kann.

Vorteilhafterweise umfasst das Set dabei mindestens ein unteres Endstück und ein oberes Endstück für beide Seiten des Lichtgitters. Das untere und das obere Endstück bilden damit die Grundausstattung des Lichtgitters und können durch ihre jeweiligen Konnektoren miteinander verbunden werden. Das untere Endstück weist dabei einen oberen Konnektor auf, das obere Endstück einen unteren Konnektor.

Weiterhin vorteilhafterweise können ein oder mehrere Zwischenstücke vorgesehen sein, welche zwischen dem unteren und dem oberen Endstück angeordnet werden können. Die Zwischenstücke weisen dabei vorteilhafterweise jeweils einen unteren und einen oberen Konnektor auf, mit welchem sie mit den Endstücken bzw. untereinander verbindbar sind. Über die Anzahl der Zwischenstücke, welche zwischen dem unteren und dem oberen Endstück eingefügt werden, kann die Überwachungshöhe des Lichtgitters an die jeweilige Einbausituation angepaßt werden.

Vorteilhafterweise weisen die Elemente dabei jeweils in mindestens einem Endbereich des Gehäuses einen Konnektor auf, welcher der mechanischen und elektrischen Verbindung mit dem angrenzenden Element dient. Vorteilhafterweise sind die Konnektoren dabei in die Endbereiche der Gehäuse integriert. Vorteilhafterweise werden die Konnektoren dabei in Form von Steckverbindungen ausgeführt. Insbesondere können die Konnektoren dabei so ausgeführt sein, daß sie ineinander geschoben werden können und dabei sowohl eine mechanische als auch eine elektrische Verbindung zwischen den Elementen herstellen.

Weiterhin kann vorgesehen sein, daß mindestens eines der Endstücke eine Steuerung zur Ansteuerung der Lichtschranken aufweist. Insbesondere kann dabei vorgesehen sein, daß die Steuerung in einem der Endstücke zur Ansteuerung sämtlicher Lichtschranken des Lichtgitters dient, und damit auch zur Ansteuerung der in den anderen Elementen angeordneten Sender und Empfänger.

Weiterhin kann vorgesehen sein, daß eines der Endstücke eine Auswerteeinheit zur Auswertung der Signale der Lichtschranken aufweist. Auch diese Auswerteeinheit kann dabei zur Auswertung sämtlicher Lichtschranken eingesetzt werden.

Weiterhin kann eines der Endstücke einen Anschluß zum Anschließen an eine Torsteuerung aufweisen. Das Lichtgitter kann so über den an einem der Endstücke angebrachten Anschluß mit einer Torsteuerung verbunden werden und dieser signalisieren, ob sich ein Hindernis im überwachten Bereich befindet.

In vorteilhafter Weise können dabei Elemente zum Aufbau einer Senderseite und Elemente zum Aufbau einer Empfängerseite vorgesehen sein. Alternativ kann jedoch auch vorgesehen sein, daß die einzelnen Elemente sowohl Sender als auch Empfänger aufweisen.

In einer möglichen Ausführungsform der vorliegenden Erfindung weisen die einzelnen Elemente dabei jeweils mehrere Sender und/oder Empfänger auf, welche in das Gehäuse übereinander eingebaut und mit den Konnektoren elektrisch verbunden sind. Die in das Gehäuse eingebauten mehreren Sender und Empfänger sind dabei vorteilhafterweise bereits komplett elektrisch miteinander und mit den Konnektoren verbunden, so daß das komplette Lichtgitter einfach nur durch Zusammenstecken der einzelnen Elemente betriebsbereit zur Verfügung gestellt werden kann.

Weiterhin können die Elemente zum Aufbau der Empfängerseite des Lichtgitters dabei jeweils eine Ausgangssignalleitung aufweisen, welche durch die Konnektoren zu einer gemeinsamen Ausgangssignalleitung der Empfänger verbindbar ist. Hierdurch kann eine besonders einfache Ausgestaltung der einzelnen Elemente und der Konnektoren zur Verfügung gestellt werden, da die einzelnen Lichtschranken nicht jeweils separat über Ausgangssignalleitungen mit der Auswerteeinheit verbunden werden müssen.

Ebenso kann vorgesehen sein, daß die Elemente jeweils mindestens eine erste Signalleitung aufweisen, welche durch die Konnektoren zu einer gemeinsamen Signalleitung der Empfänger und/oder Sender verbindbar ist.

Insbesondere kann an diese gemeinsame Signalleitung ein Steuersignal zur Ansteuerung der einzelnen Lichtschranken des Lichtgitters angelegt werden.

Weiterhin kann vorgesehen sein, daß die Elemente jeweils eine zweite Signalleitung aufweisen, in welcher Meßwiderstände angeordnet sind, welche durch die Konnektoren in Reihe geschaltet werden können. Auch an dieser zweiten Signalleitung kann dabei ein Steuersignal angelegt werden, welches zur Ansteuerung der einzelnen Lichtschranken und insbesondere zum Ein- und Ausschalten der einzelnen Lichtschranken herangezogen wird.

Vorteilhafterweise ist dabei vorgesehen, daß die einzelnen Lichtschranken durch eine Steuerung des Lichtgitters nacheinander so angesteuert werden, daß jeweils nur maximal eine Lichtschranke aktiv ist. Hierdurch beeinflussen sich die einzelnen Lichtschranken des Lichtgitters nicht gegenseitig.

Vorteilhafterweise erfolgt die Ansteuerung der Lichtschranken dabei über ein analoges Steuersignal. Insbesondere kann dabei eine Rampenfunktion eingesetzt werden, bei deren Durchlaufen die einzelnen Lichtschranken nacheinander ein- und ausgeschaltet werden.

Vorteilhafterweise wird dabei ein einziges Signal zur Ansteuerung aller Lichtschranken eingesetzt. Insbesondere kann das Signal dabei sowohl zur Ansteuerung der Sender als auch zur Ansteuerung der Empfänger eingesetzt werden.

Vorteilhafterweise wird das Steuersignal zum Ein- und Ausschalten der einzelnen Lichtschranken dabei an einer ersten und einer zweiten Signalleitung angelegt, wobei die Signalleitungen dabei in sämtlichen Elementen verlaufen und durch die Konnektoren jeweils miteinander verbindbar sind.

Weiterhin kann erfindungsgemäß vorgesehen sein, daß die Sender und/oder die Empfänger der Lichtschranken jeweils einen Fensterkomparator aufweisen, welcher den Sender bzw. Empfänger einschaltet, wenn die am Fensterkomparator anliegende Spannung in einem vorbestimmten Fenster liegt.

Weiterhin kann vorgesehen sein, daß die Sender und/oder die Empfänger jeweils einen Meßwiderstand aufweisen, wobei die Meßwiderstände der Sender und die Meßwiderstände der Empfänger jeweils in Reihe schaltbar sind.

Insbesondere kann dabei vorgesehen sein, daß, wenn mehrere Sender oder mehrere Empfänger in einem Element der Lichtschranke vorhanden sind, die jeweiligen Meßwiderstände der Sender bzw. Empfänger innerhalb des Elementes in Reihe geschaltet sind.

Weiterhin vorteilhafterweise sind die Meßwiderstände so mit den Konnektoren der Elemente verbunden, daß durch eine Verbindung der Elemente über die Konnektoren die Meßwiderstände in benachbarten Elementen in Reihe geschaltet werden.

Hierdurch kann durch ein einfaches Verbinden mehrerer Elemente die Reihenschaltung der Meßwiderstände der einzelnen Lichtschranken auf die gewünschte Länge bzw. Anzahl von Lichtschranken erweitert werden.

Vorteilhafterweise greifen die Fensterkomparatoren dabei jeweils eine Spannung ab, welche an den in Reihe schaltbaren Meßwiderständen abfällt. Insbesondere wird dabei die Spannung jeweils zwischen einer gemeinsamen Steuerleitung der Lichtschranken und einem Anschluß des dem jeweiligen Fensterkomparator zugeordneten Meßwiderstands innerhalb der Reihenschaltung abgegriffen.

Insbesondere können erfindungsgemäß die einzelnen Lichtschranken identisch ausgeführt sein. Vorteilhafterweise können dabei die gleichen Meßwiderstände und/oder die gleichen Fensterkomparatoren für sämtliche Lichtschranken eingesetzt werden. Dies erlaubt einen besonders kostengünstigen Aufbau.

Vorteilhafterweise weist die Steuerung eine Auswerteschaltung zur Auswertung der Signale von den einzelnen Lichtschranken auf. Wie bereits beschrieben, ist diese vorteilhafterweise in einem der Endstücke angeordnet.

Vorteilhafterweise geben die einzelnen Empfänger der Lichtschranken dabei ein Signal an eine gemeinsame Ausgangssignalleitung ab, wobei die Auswerteschaltung das Signal auf dieser gemeinsamen Ausgangssignalleitung auswertet. Insbesondere ist eine solche Ausgangssignalleitung dabei in allen Elementen vorhanden und wird über die Konnektoren der einzelnen Elemente miteinander verbunden. Insbesondere dann, wenn beim Ein- und Ausschalten der Lichtschranken auch die Empfänger ein- und ausgeschaltet werden, kann eine solche gemeinsame Ausgangssignalleitung eingesetzt werden, ohne daß sich die einzelnen Lichtschranken gegenseitig stören.

Vorteilhafterweise können dabei die Empfänger der Lichtschranken ein analoges Signal erzeugen, welches sie auf die Ausgangssignalleitungen legen.

Weiterhin erfindungsgemäß kann die Auswerteschaltung eine Lernfunktion aufweisen, welche das von den einzelnen Lichtschranken bei unversperrtem Weg nacheinander abgegebene Signal als Referenz abspeichert. Die Steuerung muss damit nicht auf eine bestimmte Anzahl von Lichtschranken bzw. auf eine bestimmte Anzahl von Elementen ausgelegt werden. Vielmehr erlernt die Steuer bei Inbetriebnahme des Lichtgitters, wie viele Lichtschranken eingesetzt werden.

Erfindungsgemäß kann so mit den gleichen Endstücken und einer entsprechenden Anzahl von Zwischenstücken die gewünschte Länge des Lichtgitters zur Verfügung gestellt werden, ohne daß weitere Anpassungen vorgenommen werden müßten.

Vorteilhafterweise werden dabei im Lernbetrieb die Zeiten abgespeichert, zu denen das von den einzelnen Empfängern erzeugte Signal beginnt und/oder endet. Insbesondere werden dabei die im Lernmodus aufgenommenen Signale der Empfänger mit dem Steuersignal, welches die einzelnen Lichtschranken ein- und ausschaltet, korreliert. Die so gewonnenen Daten können dann im Betrieb des Lichtgitters zur Überprüfung herangezogen werden, ob jede Lichtschranke ein gültiges Signal liefert.

Daß durch das erfindungsgemäße Set bereitstellbare Lichtgitter besteht damit im Prinzip aus einer Aneinanderreihung von Einweglichtschranken, deren Anzahl durch eine entsprechende Anzahl von Elementen bestimmt wird. Die einzelnen Einweglichtschranken werden dann in einem Multiplexverfahren nacheinander angesteuert und abgefragt. Am Ende eines Multiplexdurchlaufs müssen alle Empfänger ein gültiges Signal empfangen haben. Haben nicht alle Empfänger ein gültiges Signal gemeldet, so schließt die Auswerteeinheit hieraus, daß sich ein Hindernis im Lichtweg befindet. Das Lichtgitter meldet dies dann an die Torsteuerung.

Die vorliegende Erfindung umfasst weiterhin ein Lichtgitter aus einem Set, wie es oben beschrieben wurde. Weiterhin umfasst die vorliegende Erfindung Elemente für ein Set, wie es oben beschrieben wurde. Insbesondere umfasst die vorliegende Erfindung dabei jeweils ein unteres Endstück und ein oberes Endstück für beide Seiten des Lichtgitters und gegebenenfalls ein Zwischenstück für ein solches Set.

Weiterhin umfasst die vorliegende Erfindung ein Verfahren zum Aufbau eines Lichtgitters aus einem Set, wie es oben beschrieben wurde. Erfindungsgemäß wird dabei durch das Verbinden einer entsprechenden Anzahl von Elementen die gewünschte Überwachungshöhe des Lichtgitters erreicht.

Vorteilhafterweise weisen die einzelnen Enden jeweils Befestigungsmittel zur Befestigung der Elemente z. B. an einer Wand auf. Insbesondere können die Befestigungsmittel dabei aus Öffnungen bestehen, durch welche Schrauben hindurch in die Wand geschraubt werden können. Vorteilhafterweise sind die Befestigungsmittel dabei in die Gehäuse der Elemente integriert.

Gemäß dem erfindungsgemäßen Verfahren kann dabei vorgesehen sein, daß zunächst ein erstes Endstück an einer Wand montiert wird, insbesondere das untere Endstück. Darauf hin können ein oder mehrere Zwischenstücke aufgesteckt und jeweils an der Wand montiert werden. Zuletzt wird jeweils ein Endstück aufgesteckt und montiert.

Die Endstücke werden dann elektrisch miteinander sowie mit der Torsteuerung verbunden. Vorteilhafterweise erfolgt dabei die komplette elektrische Anbindung der beiden Seiten der Lichtgitter jeweils über eines der Endstücke, vorteilhafterweise über das obere Endstück.

Die vorliegende Erfindung wird nun anhand von Ausführungsbeispielen sowie Zeichnungen näher dargestellt. Dabei zeigen:
- Figur 1:: eine Prinzipdarstellung eines durch Lichtschranken bzw. ein Lichtgitter gemäß der vorliegenden Erfindung überwachten Torlaufweges,
- Figur 2:: eine Schaltungsanordnung für ein Ausführungsbeispiel erfindungsgemäßer Lichtschranken bzw. eines erfindungsgemäßen Lichtgitters,
- Figur 3:: ein Diagramm, welches einen Signalverlauf bei einem Ausführungsbeispiel einer erfindungsgemäßen Leistungsregelung und einer erfindungsgemäßen Gültigkeitsüberwachung zeigt,
- Figur 4:: ein Lichtgitter, welches aus einem erfindungsgemäßen Set aus Elementen aufgebaut ist,
- Figuren 5a - c:: drei Schritte eines erfindungsgemäßen Verfahrens zum Aufbau eines Lichtgitters aus einem erfindungsgemäßen Set,
- Figuren 6a, 6b:: zwei perspektivische Ansichten von Konnektoren eines erfindungsgemäßen Sets und
- Figur 7:: eine Schnittansicht durch einen Verbindungsbereich zweier Elemente eines erfindungsgemäßen Sets.

Im folgenden wird ein Ausführungsbeispiel der vorliegenden Erfindung gezeigt, welches mehrere Aspekte der vorliegenden Erfindung verwirklicht. Während die mehreren Aspekte der vorliegenden Erfindung damit im Ausführungsbeispiel miteinander kombiniert sind, ist es ebenso denkbar, die einzelnen Aspekte auch getrennt voneinander erfindungsgemäß einzusetzen.

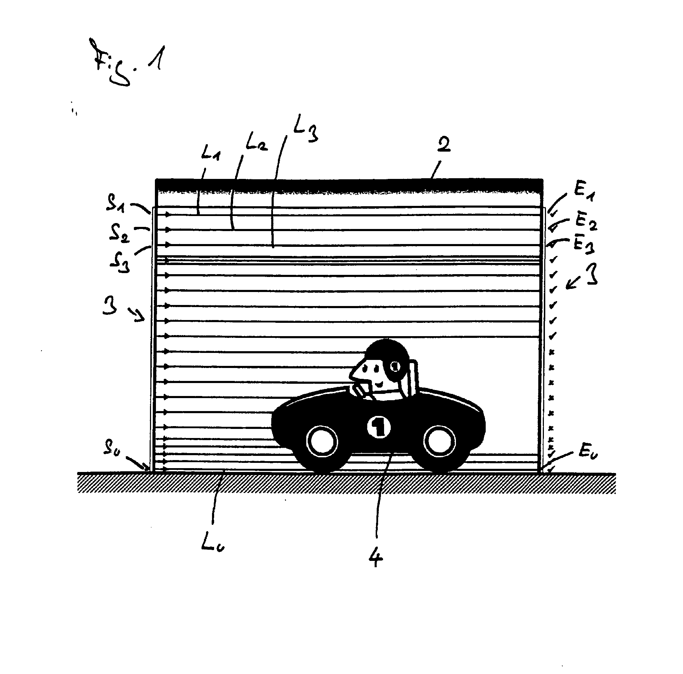

Figur 1 zeigt in einer Prinzipdarstellung ein Ausführungsbeispiel die Funktionsweise eines erfindungsgemäßen Lichtgitters, welches den Torlaufweg eines Torblatts 2 berührungslos absichert. Das Lichtgitter besteht dabei im Prinzip aus einer Aneinanderreihung von Einweglichtschranken L₁ - Lₙ. Die Lichtschranken werden dabei in bestimmten Abständen übereinander angeordnet, so daß ein Hindernis an beliebiger Position in der so entstehenden überwachten Fläche erkannt werden kann.

Jede Lichtschranke L₁ - Lₙ umfasst dabei einen Sender S₁ - Sₙ, welcher mit einem Empfänger E₁ - Eₙ zusammenwirkt und gemeinsam mit diesem den überwachten Lichtweg definiert. Befindet sich nun ein Hindernis 4 im Lichtweg, kann der entsprechende Empfänger das vom Sender abgesendete Signal nicht empfangen, da das Hindernis 4 den Lichtweg unterbricht. Liefert daher einer der Empfänger des Lichtgitters kein gültiges Signal, kann daran erkannt werden, daß sich ein Hindernis 4 im überwachten Torlaufweg befindet. Erkennt das Lichtgitter ein solches Hindernis, wird dies der Torsteuerung signalisiert, welche dann wiederum das Tor in einen sicheren Zustand bringt.

Das Lichtgitter weist dabei eine Steuerung auf, welche die einzelnen Lichtschranken ansteuert. Weiterhin weist das Lichtgitter eine Auswerteeinheit auf, welche die Signale von den Empfängern der einzelnen Lichtschranken auswertet. In einer bevorzugten Ausführungsform signalisiert die Auswerteschaltung dabei der Torsteuerung lediglich, daß sich ein Hindernis im überwachten Bereich befindet. Von der Torsteuerung aus gesehen arbeitet das Lichtgitter damit im wesentlichen wie eine übliche Lichtschranke, welche ebenfalls nur die beiden Zustände "Hindernis / kein Hindernis" unterscheidet. Hierdurch kann das erfindungsgemäße Lichtgitter mit konventionellen Torsteuerungen kombiniert werden.

Gemäß einem ersten Aspekt der vorliegenden Erfindung werden die einzelnen Lichtschranken L₁ - Lₙ des Lichtgitters in einem Multiplexverfahren nacheinander angesteuert und abgefragt. Am Ende eines Multiplexdurchlaufs müssen dabei alle Empfänger ein gültiges Signal empfangen haben. Haben nicht alle Empfänger ein gültiges Signal gemeldet, so schließt die Auswerteeinheit, daß sich ein Hindernis im Lichtweg befindet und signalisiert dies der Torsteuerung.

Erfindungsgemäß gewährleistet dabei die Ansteuerung der Lichtschranken, daß ein Sender nur seinen jeweils zugehörigen Empfänger ansteuert. Dies ist mit Hilfe der Multiplexsteuerung realisiert. Dabei werden die einzelnen Lichtschranken nacheinander angesteuert, so daß immer maximal ein Sender-Empfänger-Paar aktiv ist. So kann das empfangene Signal zu jeder Zeit eindeutig zugeordnet werden.

Vorteilhafterweise werden dabei die einzelnen Sender-Empfänger-Paare nacheinander jeweils so ein- und ausgeschaltet, daß sowohl der Sender als auch der Empfänger ein- bzw. ausgeschaltet werden.

Hierdurch kann jeder Lichtweg eindeutig ausgewertet werden. Die durch die parallele Anordnung der Lichtwege prinzipiell bestehende Möglichkeit, daß sich benachbarte Lichtwege gegenseitig beeinflussen, wird so ausgeschlossen.

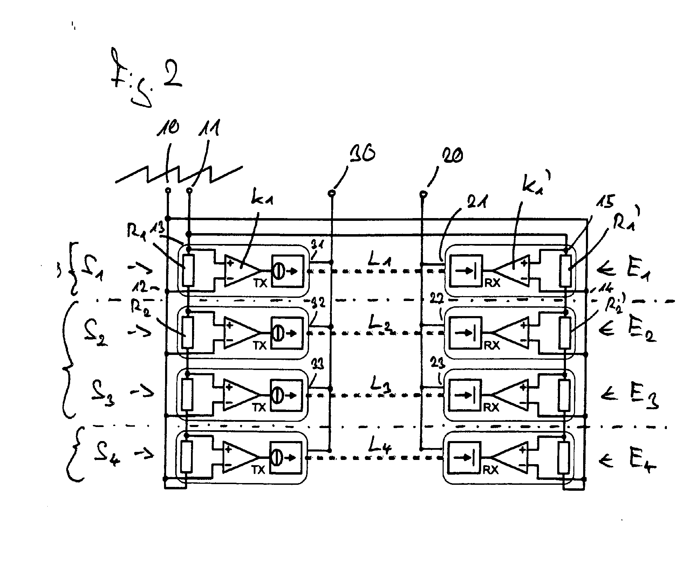

Für das erfindungsgemäße Multiplexverfahren müssen dabei die Sender mit ihren zugehörigen Empfängern synchronisiert werden. Dies kann beispielsweise durch eine Schaltungsanordnung geschehen, wie sie in Figur 2 gezeigt ist.

Jeder Sender Sₙ und jeder Empfänger Eₙ umfasst dabei einen Fensterkomparator Kₙ bzw. K'ₙ und einen Meßwiderstand Rₙ bzw. R'ₙ. Die Fensterkomparatoren Kₙ schalten dabei die Sender Sₙ ein, wenn an dem Meßwiderstand Rₙ ein bestimmter Spannungsabfall anliegt, und die Fensterkomparatoren K'ₙ schalten die Empfänger Eₙ ein, wenn an dem zugeordneten Meßwiderstand R'ₙ ein bestimmter Spannungsabfall anliegt.

Sämtliche Meßwiderstände Rₙ und R'ₙ, sowie Komparatoren Kₙ und K'ₙ können dabei identisch sein, das heißt die Meßwiderstände können alle den gleichen Widerstand und die Komparatoren können alle das gleiche Schaltfenster aufweisen.

Die Meßwiderstände Rₙ der Sender Sₙ auf der einen Seite des Lichtgitters und die Meßwiderstände R'ₙ der Empfänger Eₙ auf der anderen Seite des Lichtgitters werden dabei jeweils in Reihe geschaltet. Die in Reihe geschalteten Meßwiderstände Rₙ bzw. R'ₙ werden nun wiederum parallel geschaltet, so daß die Senderseite und die Empfängerseite parallel geschaltet ist, während die einzelnen Sender bzw. Empfänger der Lichtschranken in Reihe geschaltet sind.

Die Komparatoren greifen dabei jeweils eine Spannung zwischen einer gemeinsamen Signalleitung 10 und einem Anschluß des ihnen zugeordneten Meßwiderstands in der Reihenschaltung ab. Hierdurch liegt an jedem Komparator in der Reihenschaltung eine unterschiedliche Spannung an. An den Komparatoren der einander zugeordneten Sender und Empfänger liegt dagegen jeweils die gleiche Spannung an.

Erfindungsgemäß durchläuft nun die Spannung an der Reihenschaltung aus Meßwiderständen eine Rampenfunktion. Dadurch werden die einzelnen Sender-Empfänger-Paare durch ihre Fensterkomparatoren nacheinander ein- und wieder ausgeschaltet. Dies erlaubt es, mit Hilfe eines analogen Signals die einzelnen Lichtschranken nacheinander ein- und auszuschalten.

Im Ausführungsbeispiel wird dabei das Steuersignal zum Ein- und Ausschalten der Lichtschranken zwischen den Signalleitungen 10 und 11 angelegt, welche mit den beiden Enden der Reihenschaltung verbunden sind. Der Komparator K₁ des Senders S₁ greift nun die Spannung zwischen der Steuerleitung 10, mit welcher er über die Verbindung 12 verbunden ist, und dem Anschluß 13 des ihm zugeordneten Meßwiderstands R₁ in der Reihenschaltung ab. Der Komparator K'₁ des Empfängers E₁ greift in analoger Weise die Spannung zwischen den Punkten 14 und 15 ab.

Da es sich bei dem Sender-Empfänger-Paar S₁ - E₁ um die erste Lichtschranke in der Reihenschaltung handelt, greifen die Komparatoren dabei die gesamte über die Reihenspannung abfallende Spannung ab. Bei den darunter liegenden Lichtschranken greifen die Komparatoren dagegen die Spannung jeweils nur über einen Teil der Reihenschaltung ab, so daß die Spannung entsprechend geringer ist.

Durch eine entsprechende Einstellung des Fensters der Komparatoren und des Steuersignals zum Schalten der Lichtschranken kann so sichergestellt werden, daß bei einem Durchlauf des Steuersignals, beispielsweise bei einem Durchlauf der Rampe, alle Lichtschranken nacheinander ein- und ausgeschaltet werden, ohne daß mehrere Lichtschranken gleichzeitig aktiv wären.

Die Empfänger E₁ bis Eₙ weisen dabei jeweils einen Ausgang 21, 22, ... auf, über welchen sie mit einer gemeinsamen Ausgangssignalleitung 20 in Verbindung stehen. Sämtliche Empfänger legen damit ihr Signal an die gleiche Ausgangssignalleitung 20 an, so daß die Auswerteeinheit nur das Signal auf dieser Ausgangssignalleitung auswerten muss. Die einzelnen Empfänger stören sich dabei nicht gegenseitig, da sie erfindungsgemäß nacheinander ein- und ausgeschaltet werden und damit nicht gleichzeitig aktiv sind.

Die erfindungsgemäße Steuerung weist dabei in einem Ausführungsbeispiel eine Lernfunktion auf. Dabei wird bei Inbetriebnahme das Steuersignal zum Ein- und Ausschalten der einzelnen Lichtschranken an die Signalleitungen 10 und 11 angelegt, während sich kein Hindernis im zu überwachenden Bereich befindet. Durch das Steuersignal werden nun die einzelnen Lichtschranken ein- und wieder ausgeschaltet. Die Auswerteeinheit erhält während dieses Lerndurchlaufs ein Signal auf der Ausgangssignalleitung 20, bei welchem sich die Ausgangssignale der einzelnen Empfänger durch das Ein- und wieder Ausschalten der einzelnen Lichtschranken aneinanderreihen. Die Auswerteeinheit nimmt dieses Signal nun als Referenz für den darauffolgenden Betrieb.

Insbesondere ermittelt die Auswerteeinheit dabei im Lernbetrieb, zu welchen Zeiten bzw. in welchen Bereichen des Steuersignals zum Ein- und Ausschalten der Lichtschranken ein Signal eines Empfängers auf der Ausgangssignalleitung 20 anliegt. Liegt nun während des Betriebs in den zuvor ermittelten Bereichen kein Ausgangssignal eines Empfängers an der Ausgangssignalleitung 20 an, so schließt die Auswerteeinheit hieraus, daß sich ein Hindernis im überwachten Bereich befindet.

Der erfindungsgemäße Aufbau des Lichtgitters aus mehreren in Reihe geschalteten Lichtschranken erlaubt dabei eine einfache Kaskadierung des Lichtgitters. Insbesondere kann dabei die Steuerung und die Auswerteeinheit mit unterschiedlich vielen Lichtschranken betrieben werden, ohne daß sie hierfür speziell programmiert werden müßte. Die erfindungsgemäße Ein- und Ausschaltung über die Komparatoren erlaubt es vielmehr, mit einer im wesentlichen frei wählbaren Anzahl von Lichtschranken zu arbeiten.

Die Lernfunktion erlaubt es weiterhin, mit der gleichen Auswerteeinheit ebenfalls unterschiedlich viele Lichtschranken zu betreiben. Die Auswerteeinheit muss dabei nicht im Voraus wissen, wie viele Lichtschranken eingesetzt werden, sondern ermittelt das Referenzsignal während des Lernbetriebs.

Insbesondere kann das Lichtgitter dabei so ausgelegt sein, daß mit einer bis zu 5 Lichtschranken, vorteilhafterweise bis zu 10 Lichtschranken, weiter vorteilhafterweise bis zu 15 Lichtschranken gearbeitet werden kann.

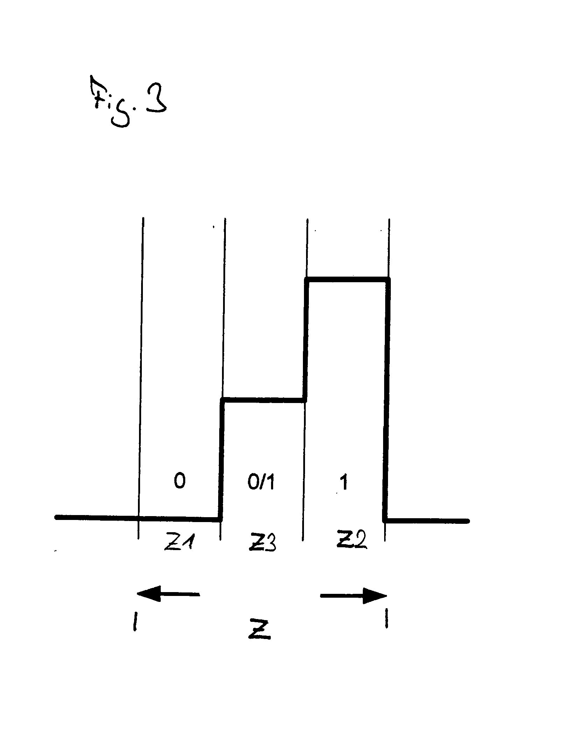

In Figur 3 ist nun ein zweiter Aspekt der vorliegenden Erfindung dargestellt, welcher sowohl bei einem Lichtgitter als auch bei einer einzelnen Lichtschranke eingesetzt werden kann. Erfindungsgemäß ist dabei ein mehrstufiger Signalaufbau des von einem Sender S abgegebenen Signals vorgesehen, um die Signale überwachen und/oder die Sendeleistung regeln zu können.

Die Signalbreite Z eines vom Sender abgegebenen Signals wird dabei in drei Zeitbereiche Z1, Z2 und Z3 unterteilt.

Im ersten Zeitbereich Z1 wird dabei kein Signal gesendet, im zweiten Zeitbereich Z2 ein Signal mit einer gewissen Signalstärke bzw. Signalamplitude. Die Auswerteeinheit ist dabei so aufgebaut, daß sie anhand einer Empfängersignalschwelle entscheidet, ob ein Signal empfangen wird oder nicht. Dies entspricht im wesentlichen einer digitalen Auswertung, bei welcher dem Signal eine Null oder eine Eins zugeordnet wird.

Ein Signal wird dabei von der Auswerteeinheit nur dann als gültig gewertet, wenn im Zeitbereich Z1 eine Null und im Zeitbereich Z2 eine Eins empfangen wird, d.h. wenn im Zeitbereich Z1 die Signalstärke unterhalb der Empfängersignalschwelle liegt und im Zeitbereich Z2 oberhalb. Damit können Störungen durch Fremdlicht verhindert werden. Insbesondere ist es sehr unwahrscheinlich, das Fremdlicht genau die erwartete Signalform aufweist, so daß Fremdlicht den Betrieb der Lichtschranke nicht beeinträchtigt.

Mit Hilfe des dritten Zeitbereichs Z3 kann die Sendeleistung geregelt werden. Die Signalamplitude im dritten Zeitbereich beträgt immer einen festen Bruchteil der Amplitude im zweiten Zeitbereich. Z. B. kann die Amplitude im zweiten Zeitbereich das doppelte der Amplitude im dritten Zeitbereich betragen. Wird nun im dritten Zeitbereich eine Null empfangen, dann wird die Sendeleistung geringfügig erhöht. Wird dagegen eine Eins empfangen, wird die Sendeleistung geringfügig gesenkt. So wird die Sendeleistung im zweiten Zeitbereich, welche für die Gültigkeit des Signals entscheidend ist, immer so eingeregelt, daß sie einen festen Faktor höher ist als die für eine ordnungsgemäße Signalübertragung gerade notwendige Leistung.

Die beiden Aspekte der Signalüberwachung und der Leistungsregelung durch die unterschiedlichen Signalamplituden in den drei Zeitbereichen können dabei offensichtlich auch unabhängig voneinander eingesetzt werden. Weiterhin ist die zeitliche Abfolge der drei Zeitbereiche aufeinander nicht festgelegt. Im Ausführungsbeispiel folgt dabei auf den ersten Zeitbereich der dritte Zeitbereich und auf diesen der zweite Zeitbereich.

Die Signalüberwachung und Leistungsregelung, wie sie in Figur 3 gezeigt ist, kann dabei sowohl bei Einzellichtschranken eingesetzt werden, als auch bei einem Lichtgitter.

Bei dem in Figur 2 gezeigten Aufbau eines Lichtgitters gemäß dem ersten Aspekt der vorliegenden Erfindung kann die Signalüberwachung und/oder Leistungsregelung gemäß dem zweiten Aspekt dabei dadurch implementiert werden, daß die Sender sämtlicher Lichtschranken über entsprechende Eingänge 31, 32, ... mit einer Steuersignalleitung 30 in Verbindung stehen, über welche die Sendeleistung bzw. die Signalform eingestellt wird.

Die Signalleitungen 10 und 11 wirken damit als Schaltsignalleitungen, über welche das Schaltsteuersignal angelegt wird, welches die einzelnen Lichtschranken nacheinander ein- und ausschaltet. Die Steuersignalleitung 30 dient dagegen zur Steuerung der Sendeleistung bzw. der Signalform für die einzelnen Sender der Lichtschranken, zu den Zeitpunkten, zu welchen diese aktiv sind.

Die oben beschriebene erfindungsgemäße Lernfunktion kann dabei auch dazu eingesetzt werden, die Steuersignale auf der Steuerleitung 30 mit den Schaltsteuersignalen an den Steuerleitungen 10 und 11 zu synchronisieren. Dabei wird im Lernmodus zunächst an der Steuersignalleitung 30 ein Signal angelegt, welches durchgehend eine maximale Sendeleistung der jeweils aktiven Sender erzeugt. Wird nun das Schaltsteuersignal durchlaufen, senden die Sender nacheinander jeweils mit maximaler Leistung für den gesamten Zeitraum, in welchem sie aktiv sind. Über das durch die Empfänger empfangene Signal kann nun die Signalbreite Z eines jeden Sender-Empfänger-Paares ermittelt und mit dem Schaltsteuersignal korreliert werden. Die Steuerung unterteilt diese Signalbreite Z dann entsprechend in drei Zeitabschnitte Z1 - Z3, in welchen im darauffolgenden Betrieb über das Signal auf der Steuersignalleitung 30 der erfindungsgemäße mehrstufige Signalaufbau für jeden Sender erzeugt wird.

Die Leistungsregelung über den dritten Zeitabschnitt kann dabei erfindungsgemäß entweder für jeden Sender separat, oder durch eine Mitteilung der in den jeweiligen dritten Zeitabschnitten Z3 empfangenen Signale erfolgen.

Wie bereits oben beschrieben erlaubt der erfindungsgemäße Aufbau des Lichtgitters einen Betrieb mit einer unterschiedlichen Anzahl von Lichtschranken. Erfindungsgemäß sind die Zeitfenster der Komparatoren und das Schaltsteuersignal dabei so ausgelegt, daß mehr als fünf, vorteilhafterweise mehr als zehn, weiterhin vorteilhafterweise mehr als fünfzehn Lichtschranken in Reihe geschaltet werden können.

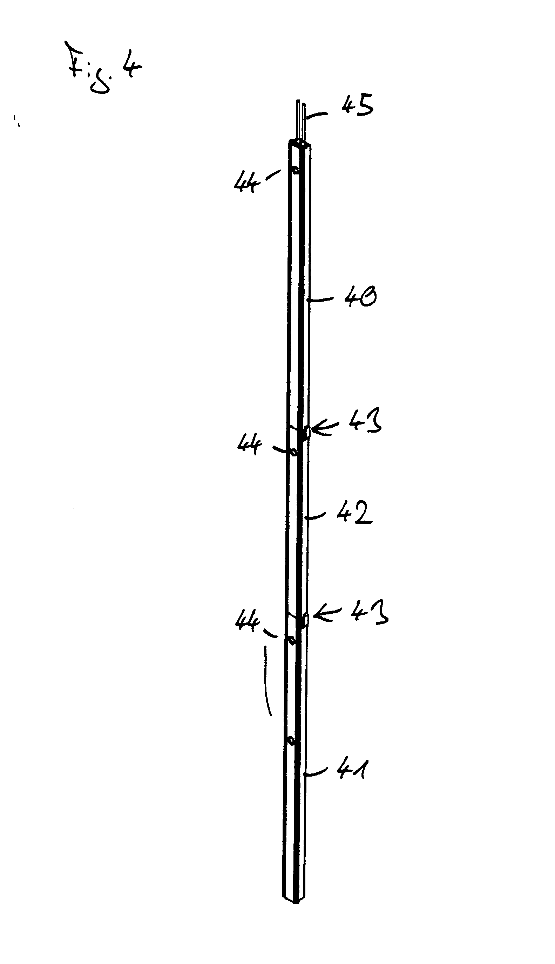

Als dritten Aspekt der vorliegenden Erfindung zeigen Figuren 4 bis 7 ein Ausführungsbeispiel eines Sets zum Aufbau eines Lichtgitters und das entsprechende Verfahren zum Aufbau des Lichtgitters, durch welches ein Lichtgitter aus vorgefertigten Elementen eines Baukastensystems jeweils in der gewünschten Länge zusammengefügt werden kann. Die Sender und Empfänger des erfindungsgemäßen Lichtgitters sind dabei jeweils in einem langgestreckten Gehäuse untergebracht, welches durch das Baukastensystem erfindungsgemäß kaskadierbar aufgebaut ist.

Das Gehäuse besteht dabei aus mehreren Elementen, die je nach Bedarf in der entsprechenden Länge zusammengesteckt werden können. Das Set weist hierzu ein oberes Endelement 40 und ein unteres Endelement 41 für beide Seiten des Lichtgitters auf. Dazwischen können je nach Bedarf weitere Zwischenelemente 42 gesteckt werden. Die Elemente sind dabei jeweils in Verbindungsbereichen 43 miteinander verbunden. Weiterhin weisen die einzelnen Elemente Mittel 44 zur Befestigung einer Wand auf, im Ausführungsbeispiel Aussparungen, durch welche Schrauben oder Befestigungsstifte hindurch geführt werden können.

In zumindest einem Endelement ist dabei vorteilhafterweise auch eine Steuerung und/oder eine Auswerteeinheit vorgesehen, welche sämtliche Lichtschranken des Gitters ansteuert bzw. die Signale von diesen auswertet. Die beiden Endelemente der linken und rechten Seite des Lichtgitters sind dabei über Signalleitungen 45 miteinander verbunden, um eine entsprechende Synchronisation und eine Signalübertragung zu ermöglichen. Weiterhin weist mindestens eines der Endelemente eine Signalleitung zur Verbindung mit einer Torsteuerung auf.

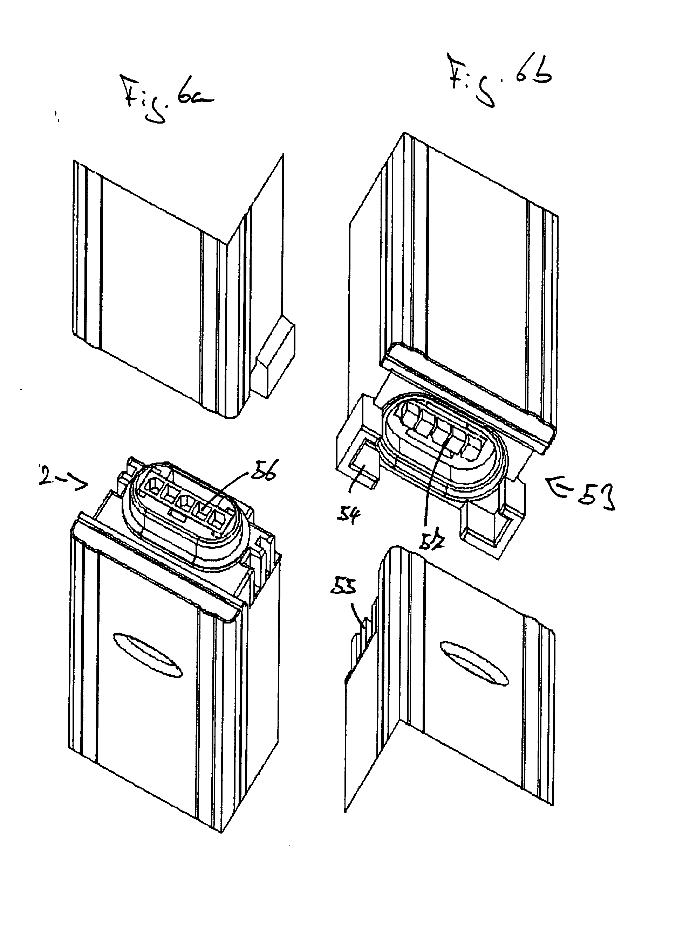

Wie insbesondere aus Figuren 6 hervorgeht, dienen die Konnektoren der einzelnen Elemente dabei sowohl der elektrischen, als auch der mechanischen Verbindung der Elemente miteinander. Die elektrische Verbindung erfolgt dabei über einen Stecker 56, welcher in eine Buchse 57 eingeschoben werden kann. Die mechanische Verbindung erfolgt über Federelemente 54, welche in Nuten 55 eingeschoben werden können. Die Endelemente 41 und 40 weisen dabei jeweils nur an ihrem oberen bzw. unteren Ende Konnektoren auf, die Zwischenelemente 42 dagegen an beiden Enden.

Jedes der Elemente kann dabei eine oder mehrere Sender bzw. Empfänger des Lichtgitters umfassen, welche vorteilhafterweise in das Gehäuse eingebaut und mit den Konnektoren verdrahtet sind.

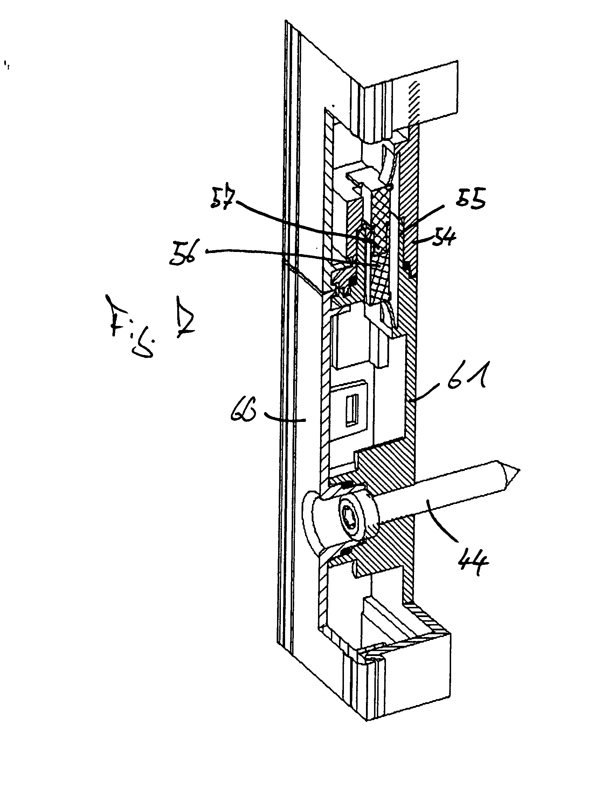

Das Gehäuse kann dabei, wie insbesondere aus Figur 7 hervorgeht, ein Deckelelement 60 sowie ein Bodenelement 61 umfassen, welche miteinander verbunden sind und das Gehäuse bilden. Die Konnektoren sind dabei jeweils in mindestens einem Endbereich des Gehäuses angeordnet.

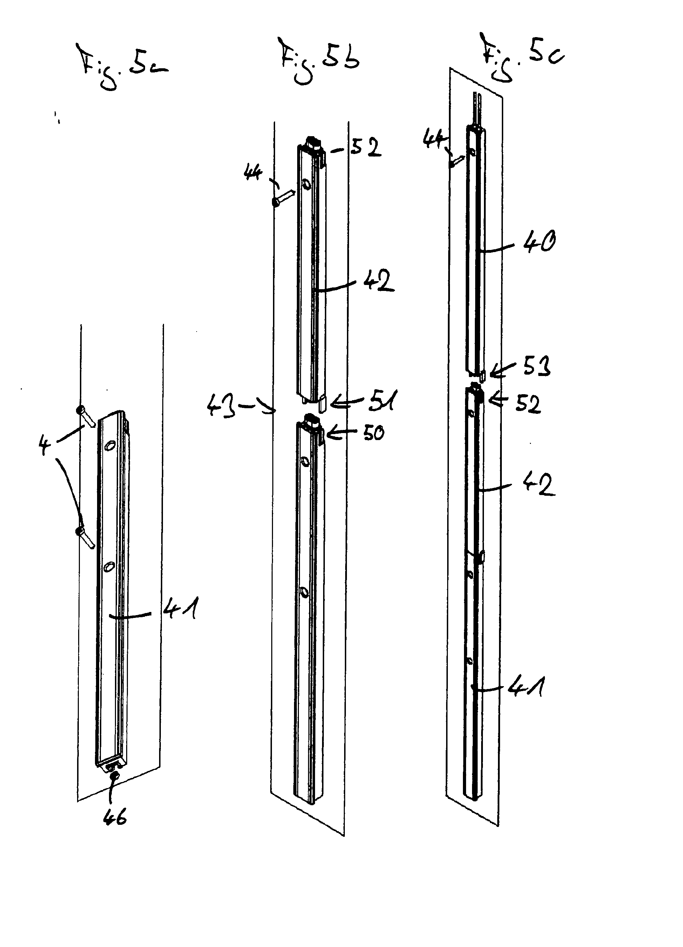

Ein Verfahren zur Montage des erfindungsgemäßen Lichtgitters ist dabei in Figuren 5 dargestellt. Dabei wird zunächst ein unteres Endelement 41 über Schrauben 44 an einer Wand befestigt. Alternativ oder zusätzlich kann das Endelement auch rückseitig auf ein Befestigungselement 46 aufgeschoben werden. Nach der Befestigung des Endelements wird nun je nach gewünschter Höhe eine entsprechende Anzahl von Zwischenstücken 42 aufgesteckt und ebenfalls an der Wand befestigt. Zuletzt wird das obere Endelement 40 aufgesteckt und befestigt.

Auf einer Seite des Tores wird dabei eine Empfängerseite aufgebaut, auf der anderen Seite eine Senderseite. Diese müssen dabei so aufeinander ausgerichtet sein, daß die jeweiligen Sender auf die ihnen zugeordneten Empfänger ausgerichtet sind. Senderseite und Empfängerseite werden über ihre entsprechenden Endstücke, insbesondere die oberen Endstücke 40, miteinander und mit der Torsteuerung verbunden.

Ein solches Baukastensystem gemäß dem dritten Aspekt der vorliegenden Erfindung kann besonders einfach mit dem als ersten Aspekt beschriebenen Aufbau eines Lichtgitters verwirklicht werden, wie er in Fig. 2 im Ausführungsbeispiel dargestellt ist.

Eine beispielhafte Aufteilung der einzelnen Lichtschranken auf die Elemente des Lichtgitters ist dabei in Figur 2 durch gestrichelte Linien dargestellt. So kann beispielsweise der Sender S₁ dem oberen Endelement 40, die Sender S₂ und S₃ dem Zwischenstück 42 und der Sender S₄ dem unteren Endstück 41 zugeordnet sein. Entsprechend sind die Empfänger E₁ bis E₄ auf oberes Endstück, Zwischenstück und unteres Endstück der Empfängerseite aufgeteilt.

Wie sofort aus Figur 2 ersichtlich, müssen dabei jeweils nur wenige elektrische Verbindungen zwischen den einzelnen Elementen über die Konnektoren hergestellt werden. Zum einen stellen die Konnektoren dabei die gemeinsame Steuerleitung 10 durch Verbindung der einzelnen Abschnitte miteinander zur Verfügung, sowie die Reihenschaltung der Meßwiderstände, und zwar auf Sender- und auf Empfängerseite. Auf der Empfängerseite wird weiterhin die gemeinsame Ausgangssignalleitung 20 durch die Konnektoren hergestellt, auf der Senderseite gegebenenfalls die gemeinsame Steuersignalleitung 30.

Die Steuerung kann dabei beispielsweise in das obere Endstück 40 auf Senderseite oder auf Empfängerseite eingebaut werden.

Wie bereits erläutert, erlaubt der Aufbau des Lichtgitters sowie die Ansteuerung dabei das Einfügen von weiteren Zwischenstücken 42 und damit das Einfügen von weiteren Lichtschranken, ohne das hierfür die Steuerung bzw. die Auswerteeinheit angepaßt werden müßten.

Die vorliegende Erfindung erlaubt somit einen besonders einfachen und dennoch sicheren Aufbau eines Lichtgitters bzw. eine entsprechende Ansteuerung des Lichtgitters oder einer Lichtschranke, wobei die einzelnen Aspekte sowohl wie im Ausführungsbeispiel kombiniert, oder auch jeweils für sich genommen eingesetzt werden können.

## Patentansprüche

1. Set zum Aufbau eines Lichtgitters zur Überwachung eines Torlaufweges, wobei das Lichtgitter eine Mehrzahl von übereinander angeordneten Lichtschranken aufweist, welche jeweils aus einem Sender und einem Empfänger aufgebaut sind,
**dadurch gekennzeichnet,**
**daß** das Set eine Mehrzahl von Elementen umfaßt, welche jeweils mindestens einen Sender oder mindestens einen Empfänger aufweisen, wobei der mindestens eine Sender oder mindestens eine Empfänger in ein Gehäuse des Elementes eingebaut ist, wobei die Elemente Konnektoren aufweisen, durch welche sie mechanisch und/oder elektrisch miteinander verbindbar sind.

2. Set nach Anspruch 1 aus mit mindestens einem unteren Endstück und einem oberen Endstück für beide Seiten des Lichtgitters, wobei vorteilhafterweise ein oder mehrere Zwischenstücke vorgesehen sind, welche zwischen dem unteren und dem oberen Endstück angeordnet werden können.

3. Set nach Anspruch 1 oder 2, wobei die Elemente jeweils in mindestens einem Endbereich des Gehäuses einen Konnektor aufweisen, welcher der mechanischen und elektrischen Verbindung mit dem angrenzenden Element dient, wobei die Konnektoren vorteilhafterweise in Form von Steckverbindungen ausgeführt sind.

4. Set nach Anspruch 2, wobei mindestens eines der Endstücke eine Steuerung zur Ansteuerung der Lichtschranken und/oder zur Auswertung der Signale der Lichtschranken und/oder einen Anschluß zum Anschließen an eine Torsteuerung aufweist.

5. Set nach einem der vorangegangenen Ansprüche, wobei Elemente zur Aufbau einer Senderseite und Elemente zum Aufbau einer Empfängerseite vorgesehen sind und/oder wobei die einzelnen Elemente jeweils mehrere Sender oder Empfänger aufweisen, welche in das Gehäuse übereinander eingebaut und mit den Konnektoren elektrisch verbunden sind.

6. Set nach Anspruch 5, wobei die Elemente zur Aufbau der Empfängerseite jeweils eine Ausgangssignalleitung aufweisen, welche durch die Konnektoren zu einer gemeinsamen Ausgangssignalleitung der Empfänger verbindbar ist.

7. Set nach einem der vorangegangenen Ansprüche, wobei die Elemente jeweils mindestens eine erste Signalleitung aufweisen, welche durch die Konnektoren zu einer gemeinsamen Signalleitung der Empfänger und/oder Sender verbindbar ist und/oder wobei die Elemente jeweils eine zweite Signalleitung aufweisen, in welcher Meßwiderstände angeordnet sind, welche durch die Konnektoren in Reihe geschaltet werden können.

8. Set nach einem der vorangegangenen Ansprüche, wobei die Sender und/oder die Empfänger jeweils einen Fensterkomparator aufweisen, welcher den Sender bzw. Empfänger einschaltet, wenn die am Fensterkomparator anliegende Spannung in einem vorbestimmten Fenster liegt und/oder wobei die Sender und/oder die Empfänger jeweils einen Meßwiderstand aufweisen, wobei die Meßwiderstände der Sender und die Meßwiderstände der Empfänger jeweils in Reihe schaltbar sind, wobei vorteilhafterweise die Fensterkomparatoren jeweils eine Spannung abgreifen, welche an den in Reihe schaltbaren Meßwiderständen abfällt, wobei die Spannung vorteilhafterweise jeweils zwischen einer gemeinsamen Steuerleitung der Lichtschranken und einem Anschluß des dem jeweiligen Fensterkomparator zugeordneten Meßwiderstands abgegriffen wird, wobei weiter vorteilhaft die einzelnen Lichtschranken identisch ausgeführt sind und insbesondere die gleichen Meßwiderstände und/oder Fensterkomparatoren aufweisen.

9. Lichtgitter aus einem Set nach einem der vorangegangenen Ansprüche und/oder Elemente für ein Set nach einem der vorangegangenen Ansprüche.

10. Verfahren zum Aufbau eines Lichtgitters aus einem Set nach einem der vorangegangenen Ansprüche, wobei durch das Verbinden einer entsprechenden Anzahl von Elementen die gewünschte Überwachungshöhe des Lichtgitters erreicht wird
